# EUROPEAN PATENT APPLICATION

(11) **EP 3 402 272 A1**
(43) Date of publication of application: **14.11.2018**
(21) Application number: 17735832.2
(22) Date of filing: 05.01.2017
(51) Int. Cl.: H04W 72/04

(54) **UPLINK REFERENCE SIGNAL TRANSMISSION METHOD AND RECEIVING METHOD, AND USER EQUIPMENT AND BASE STATION**

(30) Priority: 07.01.2016 CN 201610009054
(71) Applicant: Sharp Kabushiki Kaisha, Sakai City, Osaka 590-8522 (JP)
(72) Inventor: ZHANG, Meng, Shanghai 201203 (CN); LIU, Renmao, Shanghai 201203 (CN)
(74) Representative: Müller Hoffmann & Partner
(86) International application number: PCT/CN2017/070252
(87) International publication number: WO 2017/118394

(57) **Abstract**

The present invention provides an uplink reference signal transmission method executed by a user equipment (UE). The method comprises: determining one or more parameters for generating a demodulation reference signal (DMRS) for a Narrowband Internet of Things physical uplink control channel (NB-PUCCH), wherein for a single-tone uplink transmission, the parameters for generating the DMRS comprise an orthogonal cover code (OCC) sequence and a base sequence; and for a multi-tone uplink transmission, the parameters for generating the DMRS comprise a cyclic shift, an OCC sequence, and a base sequence; generating the DMRS for the NB-PUCCH based on the determined parameters; and delivering to a base station the generated DMRS for the NB-PUCCH. The invention further provides an uplink reference signal receiving method executed by a base station, and a UE and a base station executing the above method.

## Description

### Technical Field

The present invention relates to the field of wireless communication technology, and in particular, to an uplink reference signal transmission method and a receiving method, and a user equipment and a base station for executing the above respective method.

### Background

With rapid growth of mobile communications and great progress of technology, the world will move towards a fully interconnected network society where anyone or anything can get information and share data anytime and anywhere. It is estimated that there will be 50 billion interconnected devices by 2020, of which only about 10 billion may be mobile phones and tablet computers. The rest are not machines communicating with human beings but machines communicating with one another. Therefore, how to design a system to better support the Internet of Everything is a subject needing an in-depth study.

In the standard of Long Term Evolution (LTE) of the Third Generation Partnership Project (3GPP), machine-to-machine communication is called machine type communication (MTC). MTC is a data communication service that does not require human participation. Deployment of large-scale MTC user equipment (UE) can be used in such fields as security, tracking, billing, measurement and consumer electronics, and specifically relates applications, including video monitoring, supply chain tracking, intelligent meter reading, and remote monitoring. MTC requires lower power consumption and supports lower data transmission rate and lower mobility. The current LTE system is mainly for man-to-man communication services. The key to achieving competitive advantages of scale and application prospects of MTC services is that the LTE network supports low-cost MTC devices.

In addition, some MTC user equipments need to be installed in the basement of a residential building or at a position within the protection of an insulating foil, a metal window, or a thick wall of a traditional building; MTC suffers from more serious and obvious penetration losses from air interfaces, compared to that of conventional equipment terminals (such as mobile phones and tablet computers) in LTE networks. 3GPP decides to study the project design and performance evaluation of MTC equipments with enhanced additional 20 dB coverage. It should be noted that MTC equipments located at poor network coverage areas have the following characteristics: extremely low data transmission rates, low latency requirements, and limited mobility. In view of the above characteristics of MTC, the LTE network can further optimize some signals and/or channels to better support MTC services.

Therefore, at the 3GPP RAN #64 plenary session held in June 2014, a new MTC work item with low complexity and enhanced coverage for Rel-13 was proposed (see non-patent literature: RP-140990 New work Item on Even Lower Complexity and Enhanced Coverage LTE UE for MTC, Ericsson, NSN). In the description of this work item, an LTE Rel-13 system needs to support uplink/downlink 1.4 MHz RF bandwidth for an MTC user equipment to operate at any system bandwidth (for example, 1.4 MHz, 3 MHz, 5 MHz, 10 MHz, 15 MHz, or 20 MHz). The standardization of the work item will be completed at the end of 2015.

In addition, in order to better implement the Internet of Everything, another new work item was proposed at the 3GPP RAN # 69 general meeting held in September 2015 (see Non-Patent Document: RP-151621 New Work Item: NarrowBand IoT (NB-IoT)), which we refer to as Narrowband Internet of Things (NB-IoT). In the description of this item, an NB-IoT user equipment (UE) will support uplink/downlink 180 KHz RF bandwidth. In the existing LTE system, a minimum granularity for resource allocation of the UE is one physical resource block (PRB). That is to say, resource allocation for a physical uplink shared channel (PUSCH) and a physical uplink control channel (PUCCH) of the existing LTE system is based on a PRB. However, the NB-IoT UE supports uplink/downlink 180 kHz RF bandwidth only, i.e., RF bandwidth having the size of one PRB. A more accurate resource indication method having a smaller granularity is needed.

### Summary of Invention

The present invention mainly solves the design and indication problems for uplink demodulation reference signals (DMRS) of a NB-IoT physical uplink control channel (NB-PUCCH) in single-tone transmission and multi-tone transmission scenarios supported by NB-IoT uplink transmission.

According to one aspect of the invention, an uplink reference signal transmission method executed by a user equipment (UE) is provided, the method comprising: determining one or more parameters for generating a demodulation reference signal (DMRS) for a Narrowband Internet of Things physical uplink control channel (NB-PUCCH), wherein for a single-tone uplink transmission, the parameters for generating the DMRS comprise an orthogonal cover code (OCC) sequence and a base sequence; and for a multi-tone uplink transmission, the parameters for generating the DMRS comprise a cyclic shift, an OCC sequence, and a base sequence; generating the DMRS for the NB-PUCCH based on the determined parameters; and delivering to a base station the generated DMRS for the NB-PUCCH.

In this method, for the single-tone transmission, the OCC sequence employed by the DMRS of the NB-PUCCH is determined by a position of a resource unit allocated to the NB-IoT physical downlink control channel (NB-PDCCH).

In this method, the position of the resource unit allocated to the NB-PDCCH is one of:
- a subcarrier with a minimum serial number in the NB-PDCCH;
- an enhanced resource element group (EREG) with a minimum serial number in the NB-PDCCH.

In this method, for the single-tone uplink transmission, the OCC sequence employed by the DMRS of the NB-PUCCH is indicated by downlink control information carried by the NB-PDCCH.

In this method, for the multi-tone uplink transmission, the cyclic shift and the OCC sequence employed by the DMRS of the NB-PUCCH are determined by the resource unit allocated to the NB-PDCCH.

In this method, the cyclic shift and/or the OCC sequence employed by the DMRS of the NB-PUCCH are determined by a number of tones allocated to the NB-PDCCH.

In this method, for the multi-tone uplink transmission, the cyclic shift and the OCC sequence employed by the DMRS of the NB-PUCCH are determined by the position of the resource unit allocated to the NB-PDCCH.

In this method, the position of the resource unit allocated to the NB-PDCCH is one of:
- the subcarrier with the minimum serial number in the NB-PDCCH;
- a first EREG with the minimum serial number in the NB-PDCCH.

In this method, for the multi-tone uplink transmission, the cyclic shift and the OCC sequence employed by the DMRS of the NB-PUCCH are indicated by the downlink control information carried by the NB-PDCCH.

According to another aspect of the invention, an uplink reference signal receiving method executed by a base station is provided, the method comprising: receiving a DMRS for an NB-PUCCH from a UE, wherein the DMRS is generated by one or more parameters determined by the UE; for a single-tone uplink transmission, the parameters for generating the DMRS comprise an OCC sequence and a base sequence, and for a multi-tone uplink transmission, the parameters for generating the DMRS comprise a cyclic shift, an OCC sequence, and a base sequence; and demodulating the NB-PUCCH based on the received DMRS.

In this method, for the single-tone transmission, the OCC sequence employed by the DMRS of the NB-PUCCH is determined by a position of a resource unit allocated to the NB-IoT physical downlink control channel (NB-PDCCH).

In this method, the position of the resource unit allocated to the NB-PDCCH is one of:
- a subcarrier with a minimum serial number in the NB-PDCCH;
- an EREG with a minimum serial number in the NB-PDCCH.

In this method, for the single-tone uplink transmission, the OCC sequence employed by the DMRS of the NB-PUCCH is indicated by downlink control information carried by the NB-PDCCH.

In this method, for the multi-tone uplink transmission, the cyclic shift and the OCC sequence employed by the DMRS of the NB-PUCCH are determined by the resource unit allocated to the NB-PDCCH.

In this method, the cyclic shift and/or the OCC sequence employed by the DMRS of the NB-PUCCH are determined by a number of tones allocated to the NB-PDCCH.

In this method, for the multi-tone uplink transmission, the cyclic shift and the OCC sequence employed by the DMRS of the NB-PUCCH are determined by the position of the resource unit allocated to the NB-PDCCH.

In this method, the position of the resource unit allocated to the NB-PDCCH is one of:
- the subcarrier with the minimum serial number in the NB-PDCCH;
- the EREG with the minimum serial number in the NB-PDCCH.

In this method, for the multi-tone uplink transmission, the cyclic shift and the OCC sequence employed by the DMRS of the NB-PUCCH are indicated by the downlink control information carried by the NB-PDCCH.

According to another aspect of the present invention, a user equipment (UE) is provided, comprising:
a determining unit, configured to determine one or more parameters for generating a demodulation reference signal (DMRS) for a Narrowband Internet of Things physical uplink control channel (NB-PUCCH), wherein for a single-tone uplink transmission, the parameters for generating the DMRS comprise an orthogonal cover code (OCC) sequence and a base sequence; and for a multi-tone uplink transmission, the parameters for generating the DMRS comprise a cyclic shift, an OCC sequence, and a base sequence;
a generation unit for generating the DMRS for the NB-PUCCH based on the determined parameters; and
a transceiver for delivering to a base station the generated DMRS of the NB-PUCCH.

For the single-tone uplink transmission, the determining unit determines the OCC sequence employed by the DMRS of the NB-PUCCH through a position of a resource unit allocated to the NB-PDCCH.

The position of the resource unit allocated to the NB-PDCCH is one of:
- a subcarrier with a minimum serial number in the NB-PDCCH;
- an EREG with a minimum serial number in the NB-PDCCH.

For the single-tone uplink transmission, the determining unit indicates the OCC sequence employed by the DMRS of the NB-PUCCH through the downlink control information carried by the NB-PDCCH.

For the single-tone uplink transmission, the determining unit determines the OCC sequence employed by the DMRS of the NB-PUCCH through a position of a resource unit allocated to the NB-PDCCH.

The determining unit determines the cyclic shift and/or the OCC sequence employed by the DMRS of the NB-PUCCH through a number of tones allocated to the NB-PDCCH.

For the single-tone uplink transmission, the determining unit determines the OCC sequence employed by the DMRS of the NB-PUCCH through a position of a resource unit allocated to the NB-PDCCH.

The position of the resource unit allocated to the NB-PDCCH is one of:
- the subcarrier with the minimum serial number in the NB-PDCCH;
- the EREG with the minimum serial number in the NB-PDCCH.

For the single-tone uplink transmission, the determining unit indicates the OCC sequence employed by the DMRS of the NB-PUCCH through the downlink control information carried by the NB-PDCCH.

According to another aspect of the present invention, a base station is provided, comprising:
a transceiver, configured to receive a DMRS for an NB-PUCCH from a UE, wherein the DMRS is generated by one or more parameters determined by the UE; for a single-tone uplink transmission, the parameters for generating the DMRS comprise an OCC sequence and a base sequence, and for a multi-tone uplink transmission, the parameters for generating the DMRS comprise a cyclic shift, an OCC sequence, and a base sequence; and
a demodulating unit, configured to demodulate the NB-PUCCH based on the received DMRS.

For the single-tone uplink transmission, the OCC sequence employed by the DMRS of the NB-PUCCH is determined by a position of a resource unit allocated to the NB-IoT physical downlink control channel (NB-PDCCH).

The position of the resource unit allocated to the NB-PDCCH is one of:
- a subcarrier with a minimum serial number in the NB-PDCCH;
- an EREG with a minimum serial number in the NB-PDCCH.

In this method, for the single-tone uplink transmission, the OCC sequence employed by the DMRS of the NB-PUCCH is indicated by downlink control information carried by the NB-PDCCH.

For the multi-tone uplink transmission, the cyclic shift and the OCC sequence employed by the DMRS of the NB-PUCCH are determined by the resource unit allocated to the NB-PDCCH.

The cyclic shift and/or the OCC sequence employed by the DMRS of the NB-PUCCH are determined by a number of tones allocated to the NB-PDCCH.

For the multi-tone uplink transmission, the cyclic shift and the OCC sequence employed by the DMRS of the NB-PUCCH are determined by the position of the resource unit allocated to the NB-PDCCH.

The position of the resource unit allocated to the NB-PDCCH is one of:
- the subcarrier with the minimum serial number in the NB-PDCCH;
- the EREG with the minimum serial number in the NB-PDCCH.

For the multi-tone uplink transmission, the cyclic shift and the OCC sequence employed by the DMRS of the NB-PUCCH are indicated by the downlink control information carried by the NB-PDCCH.

### Brief Description of Drawings

The above and other features of the present invention will become more apparent from the following detailed description in conjunction with the accompanying drawings.
FIG. 1 schematically shows a flowchart of an uplink reference signal transmission method executed by a UE according to an embodiment of the present invention;
FIG. 2 schematically shows a flowchart of an uplink reference signal receiving method executed by a base station according to an embodiment of the present invention;
FIG. 3 schematically shows a structural block diagram of a UE according to an embodiment of the present invention; and
FIG. 4 schematically shows a structural block diagram of a base station according to an embodiment of the present invention.

### Description of Embodiments

The following describes the present invention in detail with reference to the accompanying drawings and specific embodiments. It should be noted that the present invention is not limited to the specific embodiments described below. In addition, for simplicity, detailed description of the known art not directly related to the present invention is omitted to prevent confusion with respect to the understanding of the present invention.

Multiple embodiments according to the present disclosure are specifically described below by using an LTE mobile communications system and its subsequent evolved version as an exemplary application environment. However, it is to be noted that the present disclosure is not limited to the following embodiments, but may be applied to other wireless communication systems, such as a future 5G cellular communication system.

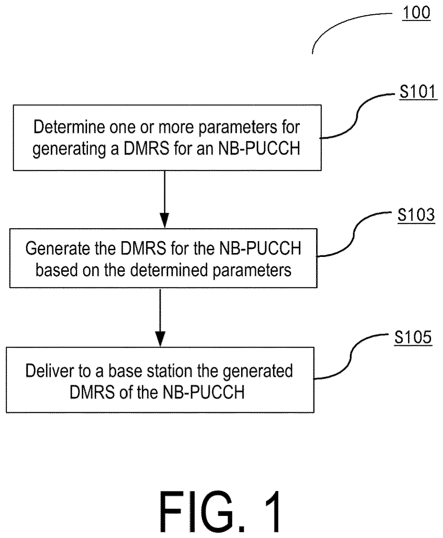

FIG. 1 schematically shows a flowchart of an uplink reference signal transmission method executed by a UE according to an embodiment of the present invention. As shown in FIG. 1, the method 100 comprises the following steps.

S101: determine, by a UE, one or more parameters for generating a DMRS for an NB-PUCCH. For a single-tone uplink transmission, the parameters for generating the DMRS include an orthogonal cover code (OCC) sequence and a base sequence (Base Sequence); and for a multi-tone uplink transmission, the parameters for generating the DMRS include a cyclic shift, an OCC sequence, and a base sequence. The present invention relates to the design for an OCC sequence employed by a DMRS in the single-tone uplink transmission, and the design for a cyclic shift and an OCC sequence employed by a DMRS in the multi-tone uplink transmission. For the base sequence, the design in the prior art is used.

In one embodiment, for the single-tone uplink transmission, the OCC sequence employed by the DMRS of the NB-PUCCH is determined by a position of a resource unit allocated to a NB-IoT physical downlink control channel (NB-PDCCH).
▪ In an implementation, a position indicator allocated to the resource unit of the NB-PDCCH is a serial number of a first subcarrier allocated to the resource unit of the NB-PDCCH, i.e. the serial number corresponding to a subcarrier with the minimum serial number.
▪ In another implementation, the position indicator allocated to the resource unit of the NB-PDCCH is the serial number of the first enhanced resource element group (EREG) allocated to the resource unit of the NB-PDCCH, i.e. the serial number corresponding to the EREG with the minimum serial number.

In another embodiment, for the single-tone uplink transmission, the OCC sequence employed by the DMRS of the NB-PUCCH is indicated by the downlink control information carried by the NB-PDCCH.

The DCI can be a bitstring.

For example, if the length of the bitstring is 1, then
when the bitstring is 0, it indicates that the DMRS of the NB-PUCCH employs an OCC sequence with a serial number of 1;
when the bitstring is 1, it indicates that the DMRS of the NB-PUCCH employs an OCC sequence with a serial number of 2.

For example, if the length of the bitstring is 2, then
when the bitstring is 00, it indicates that the DMRS of the NB-PUCCH employs an OCC sequence with a serial number of 1;
when the bitstring is 01, it indicates that the DMRS of the NB-PUCCH employs an OCC sequence with a serial number of 2;
when the bitstring is 10, it indicates that the DMRS of the NB-PUCCH employs an OCC sequence with a serial number of 3;
when the bitstring is 11, it indicates that the DMRS of the NB-PUCCH employs an OCC sequence with a serial number of 4.

For example, if the length of the bitstring is 3, then
when the bitstring is 000, it indicates that the DMRS of the NB-PUCCH employs an OCC sequence with a serial number of 1;
when the bitstring is 001, it indicates that the DMRS of the NB-PUCCH employs an OCC sequence with a serial number of 2;
when the bitstring is 010, it indicates that the DMRS of the NB-PUCCH employs an OCC sequence with a serial number of 3;
when the bitstring is 011, it indicates that the DMRS of the NB-PUCCH employs an OCC sequence with a serial number of 4;
when the bitstring is 100, it indicates that the DMRS of the NB-PUCCH employs an OCC sequence with a serial number of 5;
when the bitstring is 101, it indicates that the DMRS of the NB-PUCCH employs an OCC sequence with a serial number of 6;
when the bitstring is 110, it indicates that the DMRS of the NB-PUCCH employs an OCC sequence with a serial number of 7;
when the bitstring is 111, it indicates that the DMRS of the NB-PUCCH employs an OCC sequence with a serial number of 8.

For example, if the length of the bitstring is 4, then
when the bitstring is 0000, it indicates that the DMRS of the NB-PUCCH employs an OCC sequence with a serial number of 1;
when the bitstring is 0001, it indicates that the DMRS of the NB-PUCCH employs an OCC sequence with a serial number of 2;
when the bitstring is 0010, it indicates that the DMRS of the NB-PUCCH employs an OCC sequence with a serial number of 3;
when the bitstring is 0011, it indicates that the DMRS of the NB-PUCCH employs an OCC sequence with a serial number of 4;
when the bitstring is 0100, it indicates that the DMRS of the NB-PUCCH employs an OCC sequence with a serial number of 5;
when the bitstring is 0101, it indicates that the DMRS of the NB-PUCCH employs an OCC sequence with a serial number of 6;
when the bitstring is 0110, it indicates that the DMRS of the NB-PUCCH employs an OCC sequence with a serial number of 7;
when the bitstring is 0111, it indicates that the DMRS of the NB-PUCCH employs an OCC sequence with a serial number of 8;
when the bitstring is 1000, it indicates that the DMRS of the NB-PUCCH employs an OCC sequence with a serial number of 9.
when the bitstring is 1001, it indicates that the DMRS of the NB-PUCCH employs an OCC sequence with a serial number of 10;
when the bitstring is 1010, it indicates that the DMRS of the NB-PUCCH employs an OCC sequence with a serial number of 11;
when the bitstring is 1011, it indicates that the DMRS of the NB-PUCCH employs an OCC sequence with a serial number of 12;
when the bitstring is 1100, it indicates that the DMRS of the NB-PUCCH employs an OCC sequence with a serial number of 13;
when the bitstring is 1101, it indicates that the DMRS of the NB-PUCCH employs an OCC sequence with a serial number of 14;
when the bitstring is 1110, it indicates that the DMRS of the NB-PUCCH employs an OCC sequence with a serial number of 15;
when the bitstring is 1111, it indicates that the DMRS of the NB-PUCCH employs an OCC sequence with a serial number of 16.

In one embodiment, for the multi-tone uplink transmission, a set of a cyclic shift and an OCC sequence that is supported by a UE and employed by a DMRS of an NB-PUCCH, is determined by a resource unit allocated to an NB-PDCCH. Specifically,
▪ in an implementation, the set of the cyclic shift and the OCC sequence supported by the UE is determined by a number of subcarriers or tones allocated to the NB-PDCCH;
▪ in another implementation, the cyclic shift supported by the UE is determined by the number of subcarriers or tones allocated to the NB-PDCCH;
▪ in yet another implementation, the OCC sequence supported by the UE is determined by the number of subcarriers or tones allocated to the NB-PDCCH.

In another embodiment, for the multi-tone uplink transmission, the cyclic shift and the OCC sequence employed by the DMRS of the NB-PUCCH are determined by the position of the resource unit allocated to the NB-PDCCH.
▪ In an implementation, the position indicator allocated to the resource unit of the NB-PDCCH is the serial number of the first subcarrier allocated to the resource unit of the NB-PDCCH, i.e. the serial number corresponding to a subcarrier with the minimum serial number, which uniquely corresponds to one OCC sequence and a cyclic shift.
▪ In another implementation, the position indicator allocated to the resource unit of the NB-PDCCH is the serial number of the first EREG allocated to the resource unit of the NB-PDCCH, i.e. the serial number corresponding to an EREG with the minimum serial number, which uniquely corresponds to one OCC sequence and a cyclic shift.

In another embodiment, for the multi-tone uplink transmission, the cyclic shift and the OCC sequence employed by a DMRS of an NB-PUCCH are determined by the DCI carried by the NB-PDCCH.

The DCI can be a bitstring,

For example, if the length of the bitstring is 1, then
when the bitstring is 0, it indicates that the DMRS of the NB-PUCCH employs an OCC sequence with a serial number of 1;
when the bitstring is 1, it indicates that the DMRS of the NB-PUCCH employs an OCC sequence with a serial number of 2, and employs a cyclic shift sequence with a serial number of 2 at the same time.

For example, if the length of the bitstring is 2, then
when the bitstring is 00, it indicates that the DMRS of the NB-PUCCH employs an OCC sequence with a serial number of 1, and employs a cyclic shift sequence with a serial number of 1 at the same time;
when the bitstring is 01, it indicates that the DMRS of the NB-PUCCH employs an OCC sequence with a serial number of 2, and employs a cyclic shift sequence with a serial number of 2 at the same time;
when the bitstring is 10, it indicates that the DMRS of the NB-PUCCH employs an OCC sequence with a serial number of 3, and employs a cyclic shift sequence with a serial number of 3 at the same time;
when the bitstring is 11, it indicates that the DMRS of the NB-PUCCH employs an OCC sequence with a serial number of 4, and employs a cyclic shift sequence with a serial number of 4 at the same time;

For example, if the length of the bitstring is 3, then
when the bitstring is 000, it indicates that the DMRS of the NB-PUCCH employs an OCC sequence with a serial number of 1, and employs a cyclic shift sequence with a serial number of 1 at the same time;
when the bitstring is 001, it indicates that the DMRS of the NB-PUCCH employs an OCC sequence with a serial number of 2, and employs a cyclic shift sequence with a serial number of 2 at the same time;
when the bitstring is 010, it indicates that the DMRS of the NB-PUCCH employs an OCC sequence with a serial number of 3, and employs a cyclic shift sequence with a serial number of 3 at the same time;
when the bitstring is 011, it indicates that the DMRS of the NB-PUCCH employs an OCC sequence with a serial number of 4, and employs a cyclic shift sequence with a serial number of 4 at the same time;
when the bitstring is 100, it indicates that the DMRS of the NB-PUCCH employs an OCC sequence with a serial number of 5, and employs a cyclic shift sequence with a serial number of 5 at the same time;
when the bitstring is 101, it indicates that the DMRS of the NB-PUCCH employs an OCC sequence with a serial number of 6, and employs a cyclic shift sequence with a serial number of 6 at the same time;
when the bitstring is 110, it indicates that the DMRS of the NB-PUCCH employs an OCC sequence with a serial number of 7, and employs a cyclic shift sequence with a serial number of 7 at the same time;
when the bitstring is 111, it indicates that the DMRS of the NB-PUCCH employs an OCC sequence with a serial number of 8, and employs a cyclic shift sequence with a serial number of 8 at the same time;

For example, if the length of the bitstring is 4, then
when the bitstring is 0000, it indicates that the DMRS of the NB-PUCCH employs an OCC sequence with a serial number of 1, and employs a cyclic shift sequence with a serial number of 1 at the same time;
when the bitstring is 0001, it indicates that the DMRS of the NB-PUCCH employs an OCC sequence with a serial number of 2, and employs a cyclic shift sequence with a serial number of 2 at the same time;
when the bitstring is 0010, it indicates that the DMRS of the NB-PUCCH employs an OCC sequence with a serial number of 3, and employs a cyclic shift sequence with a serial number of 3 at the same time;
when the bitstring is 0011, it indicates that the DMRS of the NB-PUCCH employs an OCC sequence with a serial number of 4, and employs a cyclic shift sequence with a serial number of 4 at the same time;
when the bitstring is 0100, it indicates that the DMRS of the NB-PUCCH employs an OCC sequence with a serial number of 5, and employs a cyclic shift sequence with a serial number of 5 at the same time;
when the bitstring is 0101, it indicates that the DMRS of the NB-PUCCH employs an OCC sequence with a serial number of 6, and employs a cyclic shift sequence with a serial number of 6 at the same time;
when the bitstring is 0110, it indicates that the DMRS of the NB-PUCCH employs an OCC sequence with a serial number of 7, and employs a cyclic shift sequence with a serial number of 7 at the same time;
when the bitstring is 0111, it indicates that the DMRS of the NB-PUCCH employs an OCC sequence with a serial number of 8, and employs a cyclic shift sequence with a serial number of 8 at the same time;
when the bitstring is 1000, it indicates that the DMRS of the NB-PUCCH employs an OCC sequence with a serial number of 9, and employs a cyclic shift sequence with a serial number of 9 at the same time;
when the bitstring is 1001, it indicates that the DMRS of the NB-PUCCH employs an OCC sequence with a serial number of 10, and employs a cyclic shift sequence with a serial number of 10 at the same time;
when the bitstring is 1010, it indicates that the DMRS of the NB-PUCCH employs an OCC sequence with a serial number of 11, and employs a cyclic shift sequence with a serial number of 11 at the same time;
when the bitstring is 1011, it indicates that the DMRS of the NB-PUCCH employs an OCC sequence with a serial number of 12, and employs a cyclic shift sequence with a serial number of 12 at the same time;
when the bitstring is 1100, it indicates that the DMRS of the NB-PUCCH employs an OCC sequence with a serial number of 13, and employs a cyclic shift sequence with a serial number of 13 at the same time;
when the bitstring is 1101, it indicates that the DMRS of the NB-PUCCH employs an OCC sequence with a serial number of 14, and employs a cyclic shift sequence with a serial number of 14 at the same time;
when the bitstring is 1110, it indicates that the DMRS of the NB-PUCCH employs an OCC sequence with a serial number of 15, and employs a cyclic shift sequence with a serial number of 15 at the same time;
when the bitstring is 1111, it indicates that the DMRS of the NB-PUCCH employs an OCC sequence with a serial number of 16, and employs a cyclic shift sequence with a serial number of 16 at the same time.

S103: generate, by the UE, the DMRS of the NB-PUCCH based on the determined parameter.

S105: deliver, by the UE, the generated DMRS of the NB-PUCCH to a base station.

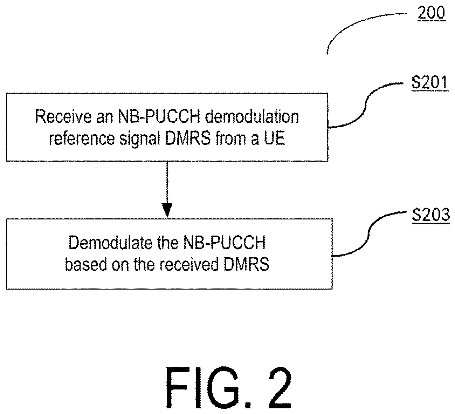

FIG. 2 schematically shows a flowchart of an uplink reference signal receiving method executed by a base station according to an embodiment of the present invention. As shown in FIG. 2, the method 200 includes the following steps.

S201: receive, by the base station, a demodulation reference signal (DMRS) for a narrowband physical uplink control channel (NB-PUCCH) from a user equipment (UE), wherein the DMRS is generated by one or more parameters determined by the UE; for a single-tone uplink transmission, the parameters for generating the DMRS comprise an OCC sequence and a base sequence, and for a multi-tone uplink transmission, the parameters for generating the DMRS comprise a cyclic shift, an OCC sequence, and a base sequence; and
S203: demodulate, by the base station, the NB-PUCCH based on the received DMRS.

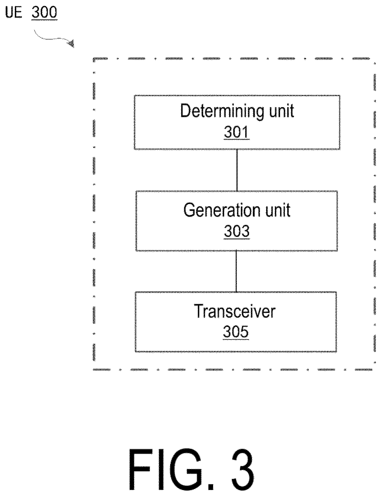

FIG. 3 schematically shows a structural block diagram of UE according to an embodiment of the present invention. It can be understood that only the UE structure related to the present invention is shown here to avoid confusion.

As shown in FIG. 3, UE 300 includes a determining unit 301, a generation unit 303, and a transceiver 305, which are configured to execute the method 100 shown in FIG. 1.

The determining unit 301 determines one or more parameters for generating a DMRS for an NB-PUCCH, wherein for a single-tone uplink transmission, the parameters for generating the DMRS comprise an orthogonal cover code (OCC) sequence and a base sequence; and for a multi-tone uplink transmission, the parameters for generating the DMRS comprise a cyclic shift, an OCC sequence, and a base sequence;

The generation unit 303 generates the DMRS for the NB-PUCCH based on the determined parameters.

The transceiver 305 delivers to a base station the generated DMRS for the NB-PUCCH.

In one embodiment, for the single-tone uplink transmission, the determining unit determines the OCC sequence employed by the DMRS of the NB-PUCCH through a position of a resource unit allocated to the NB-PDCCH.

For example, the position of the resource unit allocated to the NB-PDCCH is one of:
- a first subcarrier of the NB-PDCCH, i.e. a subcarrier with a minimum serial number;
- a first ERGE of the NB-PDCCH, i.e. an ERGE with a minimum serial number.

In another embodiment, for the single-tone uplink transmission, determining unit 301 determines the OCC sequence employed by the DMRS of the NB-PUCCH through the DCI carried by the NB-PDCCH.

In another embodiment, for the multi-tone uplink transmission, the determining unit 301 determines the cyclic shift and the OCC sequence employed by the DMRS of the NB-PUCCH through the resource unit allocated to the NB-PDCCH. Specifically, determining unit 301 determines the cyclic shift and/or the OCC sequence employed by the DMRS of the NB-PUCCH through the number of subcarriers or tones allocated to the NB-PDCCH.

In another embodiment, for the multi-tone uplink transmission, determining unit 301 determines the cyclic shift and the OCC sequence employed by the DMRS of the NB-PUCCH through the position of the resource unit allocated to the NB-PDCCH.

For example, the position of the resource unit allocated to the NB-PDCCH is one of:
- the first subcarrier of the NB-PDCCH, i.e. the subcarrier with the minimum serial number;
- the first ERGE of the NB-PDCCH, i.e. the ERGE with the minimum serial number.

In another embodiment, for the multi-tone uplink transmission, determining unit 301 indicates the cyclic shift and the OCC sequence employed by the DMRS of the NB-PUCCH through the DCI carried by the NB-PDCCH.

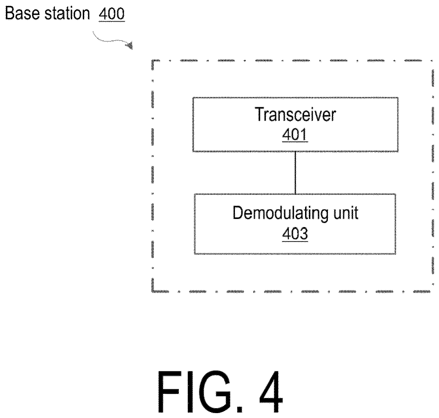

FIG. 4 schematically shows a structural block diagram of a base station according to an embodiment of the present invention. It can be understood that only the base station structure related to the present invention is shown here to avoid confusion.

As shown in FIG. 4, a base station 400 includes a transceiver 401 and a demodulating unit 403, which are configured to execute the method 200 shown in FIG. 2.

Specifically, the transceiver 401 receives a DMRS for an NB-PUCCH from a UE, wherein the DMRS is generated by one or more parameters determined by the UE; for a single-tone uplink transmission, the parameters for generating the DMRS comprise an OCC sequence and a base sequence, and for a multi-tone uplink transmission, the parameters for generating the DMRS comprise a cyclic shift, an OCC sequence, and a base sequence.

The demodulating unit 403 demodulates the NB-PUCCH based on the received DMRS.

The methods and related devices according to the present invention have been described above in conjunction with preferred embodiments. It should be understood by those skilled in the art that the methods shown above are only exemplary. The method of the present invention is not limited to steps or sequences illustrated above. The network node and the user equipment illustrated above may comprise more modules; for example, they may further comprise modules which can be developed or developed in the future to be applied to modules of a base station, an MME, or a UE. Various identifiers shown above are only exemplary, and are not meant for limiting the present invention. The present invention is not limited to specific information elements serving as examples of these identifiers. Those skilled in the art may make numerous alterations and modifications as illustrated in the shown embodiments.

It should be understood that the above-described embodiments of the present invention may be implemented through software, hardware, or a combination of software and hardware. For example, various components of the base station and user equipment in the above embodiments can be implemented through multiple devices; and these devices include, but are not limited to, an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

In this application, the "base station" refers to a mobile communication data and control switching center with large transmission power and wide coverage area, including resource allocation scheduling, data receiving, and transmitting functions. The term "user equipment" refers to a user mobile terminal, such as a terminal device that can perform wireless communication with a base station or a micro base station, including a mobile phone, a notebook, or the like.

In addition, the embodiments of the present invention, disclosed here, may be implemented on a computer program product. More specifically, the computer program product is a product provided with a computer-readable medium having computer program logic encoded thereon. When executed on a computing device, the computer program logic provides related operations to implement the above-described technical solutions of the present invention. The computer program logic enables a processor to execute the operations (methods) described in the embodiments of the present invention when the product is executed on at least one processor of a computing system. Such an arrangement of the present invention is typically provided as software, code, and/or other data structures that are configured or encoded on a computer-readable medium, such as an optical medium (for example, a CD-ROM), a floppy disk, or a hard disk, or other media such as firmware or microcode on one or more ROM or RAM or PROM chips, or downloadable software images, shared database and so on in one or more modules. Software or firmware or such configuration may be installed on a computing device so that one or more processors in the computing device execute the technical solutions described in the embodiments of the present invention.

In addition, each functional module or each feature of the base station equipment and the terminal equipment used in each of the above embodiments may be implemented or executed by a circuit, which is usually one or more integrated circuits. Circuits designed to perform various functions described in this description may include general purpose processors, digital signal processors (DSPs), application specific integrated circuits (ASICs) or general purpose integrated circuits, field programmable gate arrays (FPGAs) or other programmable logic devices, discrete gate or transistor logic, or discrete hardware components, or any combination of the above. The general purpose processor may be a microprocessor; or the processor may be an existing processor, a controller, a microcontroller, or a state machine. The above-described general purpose processor or each circuit may be configured by a digital circuit or may be configured by a logic circuit. In addition, when an advanced technology that can replace current integrated circuits emerges due to advances in semiconductor technology, the present invention may also use integrated circuits obtained using this advanced technology.

Although the present invention has been shown in connection with the preferred embodiments of the present invention, it will be understood by those skilled in the art that various modifications, substitutions and alterations may be made to the present invention without departing from the spirit and scope of the present invention. Accordingly, the present invention should not be defined by the above-described embodiments, but should be defined by the appended claims and their equivalents.

## Claims

1. An uplink reference signal transmission method executed by a user equipment (UE), the method comprising: determining one or more parameters for generating a demodulation reference signal (DMRS) for a Narrowband Internet of Things physical uplink control channel (NB-PUCCH), wherein for a single-tone uplink transmission, the parameters for generating the DMRS comprise an orthogonal cover code (OCC) sequence and a base sequence; and for a multi-tone uplink transmission, the parameters for generating the DMRS comprise a cyclic shift, an OCC sequence, and a base sequence; generating the DMRS for the NB-PUCCH based on the determined parameters; and delivering to a base station the generated DMRS for the NB-PUCCH.

2. The uplink reference signal transmission method according to claim 1, wherein for the single-tone uplink transmission, the OCC sequence employed by the DMRS of the NB-PUCCH is determined by a position of a resource unit allocated to a Narrowband Internet of Things physical downlink control channel (NB-PDCCH).

3. The uplink reference signal receiving method according to claim 2, wherein the position of the resource unit allocated to the NB-PDCCH is one of: - a subcarrier with a minimum serial number in the NB-PDCCH; - an enhanced resource element group (EREG) with a minimum serial number in the NB-PDCCH.

4. The uplink reference signal transmission method according to claim 1, wherein for the single-tone uplink transmission, the OCC sequence employed by the DMRS of the NB-PUCCH is indicated by downlink control information carried by the NB-PDCCH.

5. The uplink reference signal transmission method according to claim 1, wherein for the multi-tone uplink transmission, the cyclic shift and the OCC sequence employed by the DMRS of the NB-PUCCH are determined by the resource unit allocated to the NB-PDCCH.

6. The uplink reference signal transmission method according to claim 5, wherein the cyclic shift and/or the OCC sequence employed by the DMRS of the NB-PUCCH are determined by a number of tones allocated to the NB-PDCCH.

7. The uplink reference signal transmission method according to claim 1, wherein for the multi-tone uplink transmission, the cyclic shift and the OCC sequence employed by the DMRS of the NB-PUCCH are determined by the position of the resource unit allocated to the NB-PDCCH.

8. The uplink reference signal receiving method according to claim 7, wherein the position of the resource unit allocated to the NB-PDCCH is one of: - the subcarrier with the minimum serial number in the NB-PDCCH; - a first enhanced resource element group (EREG) with a minimum serial number in the NB-PDCCH.

9. The uplink reference signal transmission method according to claim 1, wherein for the multi-tone uplink transmission, the cyclic shift and the OCC sequence employed by the DMRS of the NB-PUCCH are indicated by the downlink control information carried by the NB-PDCCH.

10. An uplink reference signal receiving method executed by a base station, the method comprising: receiving a DMRS for an NB-PUCCH from a UE, wherein the DMRS is generated by one or more parameters determined by the UE; for a single-tone uplink transmission, the parameters for generating the DMRS comprise an OCC sequence and a base sequence, and for a multi-tone uplink transmission, the parameters for generating the DMRS comprise a cyclic shift, an OCC sequence, and a base sequence; and demodulating the NB-PUCCH based on the received DMRS.

11. The uplink reference signal receiving method according to claim 10, wherein for the single-tone uplink transmission, the OCC sequence employed by the DMRS of the NB-PUCCH is determined by a position of a resource unit allocated to a Narrowband Internet of Things physical downlink control channel (NB-PDCCH).

12. The uplink reference signal receiving method according to claim 11, wherein the position of the resource unit allocated to the NB-PDCCH is one of:
- a subcarrier with a minimum serial number in the NB-PDCCH;
- an EREG with a minimum serial number in the NB-PDCCH.

13. The uplink reference signal receiving method according to claim 10, wherein for the single-tone uplink transmission, the OCC sequence employed by the DMRS of the NB-PUCCH is indicated by downlink control information carried by the NB-PDCCH.

14. The uplink reference signal receiving method according to claim 10, wherein for the multi-tone uplink transmission, the cyclic shift and the OCC sequence employed by the DMRS of the NB-PUCCH are determined by the resource unit allocated to the NB-PDCCH.

15. The uplink reference signal receiving method according to claim 14, wherein the cyclic shift and/or the OCC sequence employed by the DMRS of the NB-PUCCH are determined by a number of tones allocated to the NB-PDCCH.

16. The uplink reference signal receiving method according to claim 10, wherein for the multi-tone uplink transmission, the cyclic shift and the OCC sequence employed by the DMRS of the NB-PUCCH are determined by the position of the resource unit allocated to the NB-PDCCH.

17. The uplink reference signal receiving method according to claim 16, wherein the position of the resource unit allocated to the NB-PDCCH is one of: - the subcarrier with the minimum serial number in the NB-PDCCH; - the EREG with the minimum serial number in the NB-PDCCH.

18. The uplink reference signal receiving method according to claim 10, wherein for the multi-tone uplink transmission, the cyclic shift and the OCC sequence employed by the DMRS of the NB-PUCCH are indicated by the downlink control information carried by the NB-PDCCH.

19. A user equipment (UE), comprising a determining unit, configured to determine one or more parameters for generating a demodulation reference signal (DMRS) for a Narrowband Internet of Things physical uplink control channel (NB-PUCCH), wherein for a single-tone uplink transmission, the parameters for generating the DMRS comprise an orthogonal cover code (OCC) sequence and a base sequence; and for a multi-tone uplink transmission, the parameters for generating the DMRS comprise a cyclic shift, an OCC sequence, and a base sequence; a generation unit for generating the DMRS for the NB-PUCCH based on the determined parameters; and a transceiver for delivering to a base station the generated DMRS for the NB-PUCCH.

20. The UE according to claim 19, wherein for the single-tone uplink transmission, the determining unit determines the OCC sequence employed by the DMRS of the NB-PUCCH through a position of a resource unit allocated to a Narrowband Internet of Things physical downlink control channel (NB-PDCCH).

21. The UE according to claim 20, wherein the position of the resource unit allocated to the NB-PDCCH is one of:
- a subcarrier with a minimum serial number in the NB-PDCCH;
- an EREG with a minimum serial number in the NB-PDCCH.

22. The UE according to claim 19, wherein for the single-tone uplink transmission, the determining unit indicates the OCC sequence employed by the DMRS of the NB-PUCCH through downlink control information carried by the NB-PDCCH.

23. The UE according to claim 19, wherein for the multi-tone uplink transmission, the determining unit determines the cyclic shift and the OCC sequence employed by the DMRS of the NB-PUCCH through the resource unit allocated to the NB-PDCCH.

24. The UE according to claim 23, wherein the determining unit determines the cyclic shift and/or the OCC sequence employed by the DMRS of the NB-PUCCH through a number of tones allocated to the NB-PDCCH.

25. The UE according to claim 19, wherein for the multi-tone uplink transmission, the determining unit determines the cyclic shift and the OCC sequence employed by the DMRS of the NB-PUCCH through the position of the resource unit allocated to the NB-PDCCH.

26. The UE according to claim 25, wherein the position of the resource unit allocated to the NB-PDCCH is one of: - the subcarrier with the minimum serial number in the NB-PDCCH; - the EREG with the minimum serial number in the NB-PDCCH.

27. The UE according to claim 19, wherein for the multi-tone uplink transmission, the determining unit indicates the cyclic shift and the OCC sequence employed by the DMRS of the NB-PUCCH through the downlink control information carried by the NB-PDCCH.

28. A base station, comprising a transceiver configured to receive a DMRS for an NB-PUCCH from a UE, wherein the DMRS is generated by one or more parameters determined by the UE; for a single-tone uplink transmission, the parameters for generating the DMRS comprise an OCC sequence and a base sequence, and for a multi-tone uplink transmission, the parameters for generating the DMRS comprise a cyclic shift, an OCC sequence, and a base sequence; and a demodulating unit, configured to demodulate the NB-PUCCH based on the received DMRS.

29. The base station according to claim 28, wherein for the single-tone uplink transmission, the OCC sequence employed by the DMRS of the NB-PUCCH is determined by the position of the resource unit allocated to the NB-PDCCH.

30. The base station according to claim 29, wherein the position of the resource unit allocated to the NB-PDCCH is one of:
- the subcarrier with the minimum serial number in the NB-PDCCH;
- the EREG with the minimum serial number in the NB-PDCCH.

31. The base station according to claim 28, wherein for the single-tone uplink transmission, the OCC sequence employed by the DMRS of the NB-PUCCH is indicated by the downlink control information carried by the NB-PDCCH.

32. The base station according to claim 28, wherein for the multi-tone uplink transmission, the cyclic shift and the OCC sequence employed by the DMRS of the NB-PUCCH are determined by the resource unit allocated to the NB-PDCCH.

33. The base station according to claim 32, wherein the cyclic shift and/or the OCC sequence employed by the DMRS of the NB-PUCCH are determined by a number of tones allocated to the NB-PDCCH.

34. The base station according to claim 28, wherein for the multi-tone uplink transmission, the cyclic shift and the OCC sequence employed by the DMRS of the NB-PUCCH are determined by the position of the resource unit allocated to the NB-PDCCH.

35. The base station according to claim 34, wherein the position of the resource unit allocated to the NB-PDCCH is one of:
- the subcarrier with the minimum serial number in the NB-PDCCH;
- the EREG with the minimum serial number in the NB-PDCCH.

36. The base station according to claim 28, wherein for the multi-tone uplink transmission, the cyclic shift and the OCC sequence employed by the DMRS of the NB-PUCCH are indicated by the downlink control information carried by the NB-PDCCH.
